# EUROPEAN PATENT SPECIFICATION

(11) **EP 0 404 397 B1**
(45) Date of publication and mention of the grant of the patent: **26.10.1994**
(21) Application number: 90306211.5
(22) Date of filing: 07.06.1990
(51) Int. Cl.: G09G 1/28, G09G 5/02, H04N 1/46

(54) **Image processing system**
Bildverarbeitungssystem
Système de traitement d'image

(30) Priority: 19.06.1989 US 368440
(43) Date of publication of application: 27.12.1990
(73) Proprietor: International Business Machines Corporation, Armonk, N.Y. 10504 (US)
(72) Inventor: Deacon, John Joseph, Austin, TX 78727 (US)
(74) Representative: Burt, Roger James, Dr.

(56) References cited:
- EP-A- 0 186 828
- EP-A- 0 187 534
- EP-A- 0 212 131
- EP-A- 0 244 141

## Description

The present invention relates to an image processing system wherein colour images made up of rows and claims of picture elements may be resized.

The presentation and manipulation of colour images within a data processing system is well known in the prior art. Generally such images are produced by combining various components of each of the three primary colours, that is, red, green and blue. A computer display capable of producing such images is often referred to as a RGB display, due to the separate control of the red component, the green component and the blue component.

The increased capability of modern data processing systems to produce and capture colour images and display those images utilising sophisticated display devices has led to an ever increasing utilisation of such images in various applications. One problem which arises with the increased utilisation of these colour images is the large amount of processing which is necessary to resize a colour image from an existing set of dimensions to a larger or smaller set of dimensions.

Many methods are employed in known colour image display management systems for resizing colour images. For example, there are techniques which may be utilised to decrease the size of a colour image by deleting selected image information in a quasi-intelligent manner. Additionally, certain known systems employ sophisticated filters which utilise extensive floating point operations. Between these two approaches in terms of quality and speed is a technique which utilises a proportional amount of information from the original image data to create a resized image. This technique produces fairly accurate results; however, the amount of data manipulation which is required makes this approach expensive in terms of processor assets.

EP-A-244141 discloses an image processing system in which a selectable interpolation table is used to generate a stored image in accordance with an enlarging or reducing magnification from information read from an image reading device. It forms the precharacterising portion of claim 1.

EP-A-212131 discloses an apparatus for calculating the intensity of pels in an enlarged, reduced or filtered image from the weighted sum of the surround pels in the original image. A loadable table is provided which contains the weight factors associated with pels in a reference window as well as the displacement by which the reference window has to be shifted to calculate the next pel in the transformed image.

Thus, it should be apparent that a need exists for image processing apparatus which may be utilised to rapidly and efficiently resize colour images without the necessity of processing.

Therefore, in accordance with the present invention there is provided an image processing system for resizing a source colour image of a first size comprised of rows and columns of source picture elements to form a destination colour image of a second size comprised of rows and columns of destination picture elements, each picture element comprising multiple colour components, characterised by: storage means for storing a first table containing values corresponding to proportions and magnitudes of each colour component and a second table containing an indication of proportions of the colour components of each source picture element which must be utilised to generate destination picture elements of the destination colour image; control logic for accessing the values within the first table utilising said proportions of each source picture element specified in said second table and the magnitude of each colour component of said source picture elements and for combining said values accessed form said first table to create colour component values for the destination picture elements.

The particular portions of the source picture elements can be combined by taking their sum. The sum of the particular portions of the source picture elements combined to make up a destination picture element can be rounded up to 100%. It is an advantage of the invention that only additions are needed in the combination of the particular portions of the source picture elements, providing increased efficiency and rapidity.

In a preferred form of the invention the image processing system further comprises operator input means for receiving operator inputs indicative of the size of the source and/or destination image by an operator and control logic is responsive to the operator input means to determine an appropriate second table. The operator input means might be a keyboard or a mouse connected to the image processing system via a user interface. The second table can be dynamically created by the image processing system according to the size of the destination image or, alternatively, can be selected from a plurality of prestored tables corresponding to the size of the destination image.

According to a preferred feature of the invention only nonrepetitive data is contained in the second table and the second table is utilised recursively.

The image processing system can be a data processing system which may include other components such as a keyboard, a display device, storage devices, communications links and the like or the image processing system can be an adapter card for use with such a data processing system.

According to another aspect of the invention there is provided a method for operating an image processing system as claimed in any preceding claim for resizing a colour image comprised of rows and columns of picture elements, each picture element comprising multiple colour components, said method comprising the steps of: establishing in the storage means a first table of values corresponding to proportions and magnitudes of each colour component; accessing said values of first table utilising said proportions of each picture element contained within said second table and the magnitude of each colour component within said picture element; and combining said values accessed from said first table to create rows and columns of new picture elements.

The invention will best be understood by reference to the following detailed description of an illustrative embodiment when read in conjunction with the accompanying drawings, wherein:
Figure 1 depicts a block diagram of a data processing system in accordance with the present invention;
Figures 2A and 2B depict respectively in schematic form an original colour image and a reduced colour image created therefrom in accordance with the present invention;
Figure 3 depicts a colour component table which may be utilised to create a resized colour image in accordance with the present invention; and
Figure 4 depicts an interpretive table which may be utilised to create a resized colour image in accordance with the present invention.

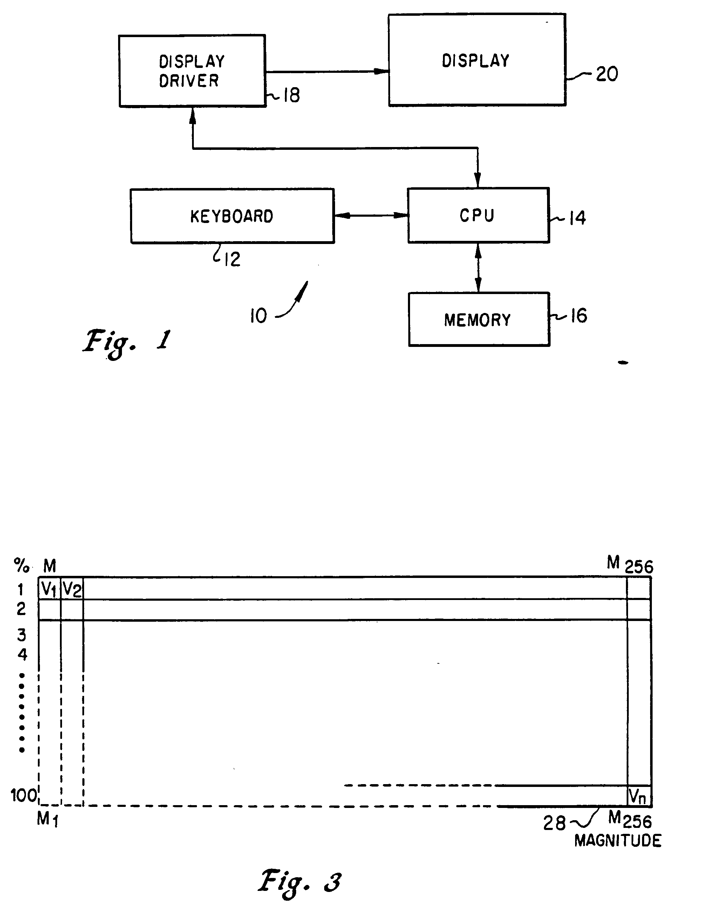

With reference now to the figures and in particular with reference to Figure 1, there is depicted in block diagram form a data processing system 10 in accordance with the present invention. As may be seen, data processing system 10 includes a keyboard 12 which is coupled to a central processing unit 14, in a manner well known in the art. Also coupled to central processing unit 14 is memory device 16, which may comprise both volatile and nonvolatile memory storage devices and which may include auxiliary memory devices such as magnetic disc or tape storage.

Central processing unit 14 is also coupled to display driver 18 which is utilised, in a manner well known in the art, to provide a visual display by coupling appropriate control signals to display 20. Those skilled in the art will appreciate that display 20 may be provided by an RGB display or other colour display device well known in the art. Data processing system 10 may, of course, include other components and may be provided by a personal computer such as the IBM Model No. PS/2 manufactured by International Business Machines Corporation of Armonk, New York.

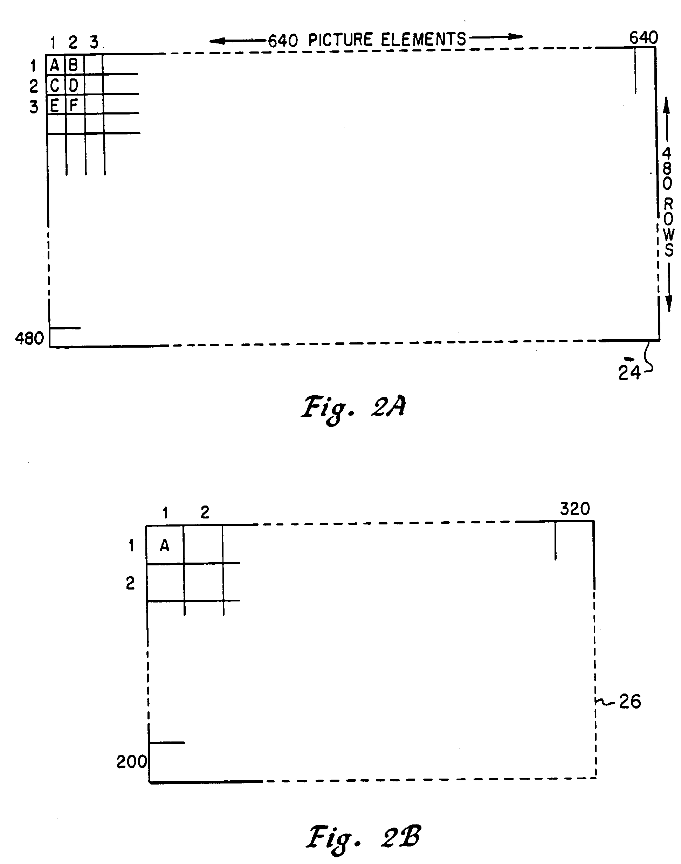

Referring now to Figures 2A and 2B, there are depicted respectively in schematic form an original colour image and a reduced colour image which is created therefrom in accordance with the present invention. As may be seen, Figure 2A depicts a colour image 24 which is comprised of multiple rows and columns of picture elements or pixels. Colour image 24, as depicted in Figure 2A, is comprised of a matrix of picture elements which is 640 columns by 480 rows. Of course, those skilled in the art will appreciate that each picture element within the aforementioned matrix will include a red component, a green component, and a blue component, each of which may have a variable magnitude, as determined by the particular display system utilised.

Referring now to Figure 2B, there is depicted a reduced colour image 26 which is created in accordance with the present invention from colour image 24 of Figure 2A. As may be seen, the reduced colour image 26 within Figure 2B is comprised of a matrix of 320 columns by 200 rows of picture elements. Thus, in the depicted example, it should be apparent that picture element A of reduced colour image 26 will be comprised of all of picture elements A, B, C, and D of colour image 24 as well as part of picture elements E and F of colour image 24.

Simple mathematics will lead those skilled in the art to appreciate that picture element A of reduced colour image 26 will necessarily include all of picture elements A, B, C and D of colour image 24 as well as 40% of picture elements E and F. Thus, the value of picture element A of reduced colour image 26 may be expressed mathematically as the weighted sum of picture elements A, B, C and D of colour image 24 plus a weighted sum of picture elements E and F of colour image 24 divided by a scaling factor. As may be seen, a number of multiplications and divisions are thus required for the calculation of each picture element.

In the depicted example there are 640 x 480 x 3 individual picture element components which must be processed in accordance with the mathematical formula described above in order to resize the associated colour image. It should be apparent that this process is quite expensive in terms of processor assets since almost one million mathematical operations must be carried out and that a system which utilises only a few additions or subtractions must necessarily be more efficient and rapid in terms of resizing colour images.

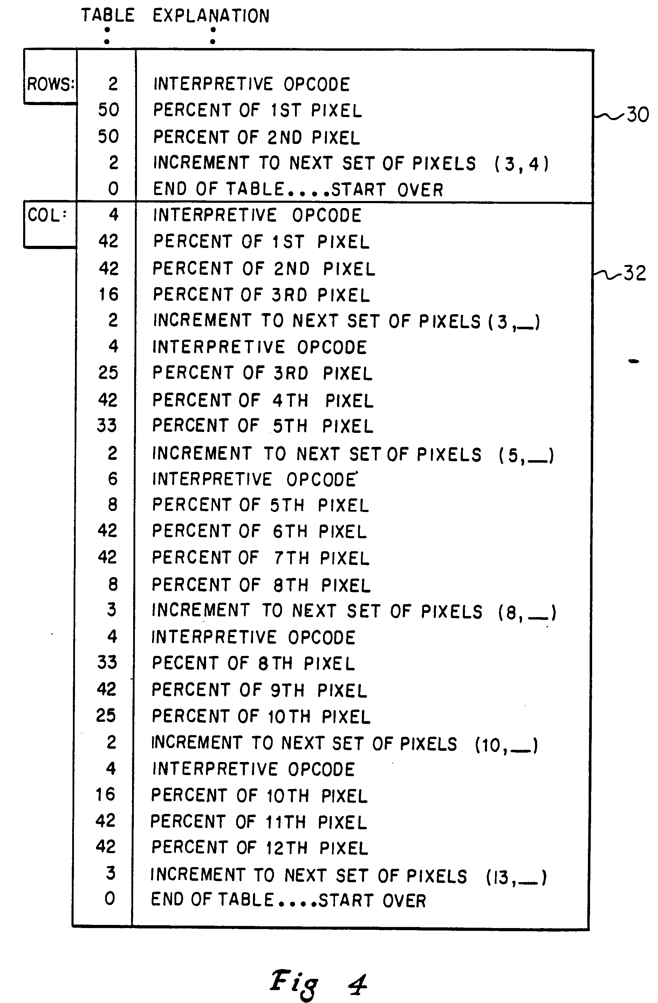

With reference now to Figure 3, there is depicted a colour component table which may be utilised to create a resized colour image in accordance with the present invention. As may be seen, colour component table 28 comprises a matrix which includes a column for each permitted magnitude of each colour component and a row for each selected percentage of that component. Thus, in an embodiment where each colour component may assume one of 256 permitted magnitudes and it is desired to specify selected percentages by units, the resultant matrix represented by colour component table 28 will comprise 100 rows by 256 columns. At each intersection formed within colour component table 28 a value is stored which corresponds to a selected percentage of a permitted magnitude of that colour component. The selected percentage and the particular magnitude for a particular value at an intersection are listed at the row and column associated with that intersection. In this manner, it is possible to rapidly ascertain the value of a known magnitude of a colour component which corresponds to a specific percentage of that colour component.

Of course, those skilled in the art will appreciate that where all colour components are restricted to the same number of permitted magnitudes it will be possible to utilise one colour component table for all three colour components. Further, in those applications where different colour components have different numbers of permitted magnitudes, it will still be possible to utilise one colour component table by adding additional "zeroes" at the end of the digital representation of the colour component magnitudes which utilise fewer permitted magnitudes.

Finally, referring to Figure 4, there is depicted an interpretative table which may be dynamically created and utilised in accordance with the present invention to create a resized colour image. As may be seen, the interpretative table includes a row table 30 and a column table 32, each of which is dynamically created in response to the selection by an operator of the dimensions of the desired colour image.

Row table 30 and column table 32 within Figure 4 have been selected to correspond to the reduction of a 640 columns by 480 row image to a 320 column by 200 row image, as depicted in Figures 2A and 2B. As may be seen, row table 30 begins with an interpretative operator code which specifies how many picture elements will be operated upon. Next, a percentage is listed for each of the picture elements which will operated upon. In the illustrated example, the new picture element to be constructed will incorporate 50% of the first picture element and 50% of the second picture element.

Thereafter, row table 30 includes an increment control which is utilised to determine which picture element within that row will be operated upon next. After each pair of picture elements within a row have been combined in accordance with the percentages listed within row table 30, a control element is listed which directs the operation to begin row table 30 again. In this manner, only the nonrepetitive data necessary to combine the picture elements in each row is listed within table row 30.

Next, column table 32 begins with an interpretive operation code which specifies how many picture elements will be operated upon. As above, column table 32 next list the percentages of each picture element which will be combined to form a new picture element. It should be noted that the sum of all old picture elements which will be combined to make up a new picture element will always be rounded up to 100%. This is particularly important when resizing images that have a high graphic content so that truncation does not cause a loss of solid colour areas.

As above, column table 32 utilises an increment control to determine which picture element will be operated upon next and an interpretative operator code to specify how many picture elements are included in this operation. In a manner similar to that discussed above, this process continues until it begins to repeat, at which point the table includes a recursive control which directs the operations of column table 32 to begin again.

In the manner described herein, it is possible to rapidly resize a colour image by utilising a colour component look-up table which permits a value corresponding to a specific percentage of each permitted magnitude of a colour component to be rapidly determined. Next, a dynamically created interpretative table based upon the specific image size desired is created by calculating only once the nonrepetitive percentages of each picture element which must be combined to form a resized image.

The percentages within the interpretative table are then utilised to access desired values within the colour component look-up table which are then rapidly combined to form the desired new picture elements. The disclosed algorithm may be utilised to process one row at a time and resized row values are accumulated until enough columns have been processed to provide an output row. Those skilled in the art will appreciate that the aspect ratio of a given image may be retained or dismissed, as desired, and may be controlled by operator inputs.

The tables 28, 30, 32 and the control logic are stored in this embodiment in the memory 16 but there are many other possibilities, for example, they could be in special purpose storage located on for example, a display adapter card.

There has been described an image processing system or apparatus and a method of operation which utilises a first table which includes values which correspond to selected percentages of each permitted magnitude of a colour component within a picture element. In an embodiment where each colour component is restricted to an equal number of permitted magnitudes only one table will be required. Next, operator inputs which indicate the desired image size are utilised to dynamically create a second table which contains nonrepetitive information which may be utilised to determine what percentages of existing picture elements which must be utilised to create new picture elements for the resized image. The percentages from the second table are then utilised to access the values within the first table to determine those values of each colour component which must be combined to create each new picture element. After all of the components of each new picture element have been determined, the components are combined and the new picture elements are utilised to create a resized colour image.

In this manner, it is possible to create a resized colour image by utilising look-up tables rather than utilising extensive processor assets to dynamically calculate each new picture element in turn.

## Claims

1. Image processing system for resizing a source colour image (24) of a first size comprised of rows and columns of source picture elements to form a destination colour image (26) of a second size comprised of rows and columns of destination picture elements, each picture element comprising multiple colour components, characterised by:
storage means for storing a first table (28) containing values corresponding to proportions and magnitudes of each colour component and a second table (30, 32) containing an indication of proportions of the colour components of each source picture element which must be utilised to generate destination picture elements of the destination colour image (26);
control logic for accessing the values within the first table (28) utilising said proportions of each source picture element specified in said second table (30, 32) and the magnitude of each colour component of said source picture elements and for combining said values accessed from said first table to create colour component values for the destination picture elements.

2. Image processing system as claimed in Claim 1 comprising operator input means (12) for receiving operator inputs indicative of the size of the source and/or destination image by an operator and wherein the control logic is responsive to the operator input means to determine the second table (30, 32) according to the sizes of the source and destination images.

3. Image processing system as claimed in any preceding claim wherein the second table (30, 32) is dynamically created according to the size of the destination image.

4. Image processing system as claimed in any preceding claim wherein the second table (30, 32) is selected from amongst a plurality of stored tables corresponding to the size of the destination image.

5. Image processing system as claimed in any preceding claim wherein only non-repetitive data is contained in the second table (30, 32) and the second table is utilised recursively.

6. Image processing system as claimed in any preceding claim wherein each picture element comprises a red colour component, a green colour component, and a blue colour component.

7. Image processing system as claimed in any preceding claim wherein said first table contains values corresponding to selected percentages of each permitted magnitude of each colour component.

8. Image processing system as claimed in claim 7 wherein each colour component includes an equal number of permitted magnitudes.

9. Image processing system as claimed in any preceding claim comprising a colour display mans (20) for displaying said rows and columns of destination picture elements.

10. A method for operating an image processing system as claimed in any preceding claim for resizing a colour image (24) comprised of rows and columns of picture elements, each picture element comprising multiple colour components, said method comprising the steps of:
establishing in the storage means a first table (28) of values corresponding to proportions and magnitudes of each colour component;
accessing said values of first table (28) utilising said proportions of each picture element contained within said second table (30, 32) and the magnitude of each colour component within said picture element;
and combining said values accessed from said first (28) table to create rows and columns of new picture elements.

## Patentansprüche

1. Bildverarbeitungssystem zum Umformen eines Quellen-Farbbildes (24) eines ersten Formates, das aus Zeilen und Spalten von Quellen-Bildelementen besteht, um ein Bestimmungs-Farbbild (26) eines zweiten Formates zu bilden, das aus Zeilen und Spalten von Bestimmungs-Bildelementen besteht, wobei jedes Bildelement aus mehrfachen Farbkomponenten besteht, gekennzeichnet durch:
eine Speichereinrichtung zum Speichern einer ersten Tabelle (28), die Werte enthält, die den Verhältnissen und Größen jeder Farbkomponente entsprechen, und einer zweiten Tabelle (30,32), die eine Angabe der Verhältnisse der Farbkomponenten jedes Quellen-Bildelementes enthält, die benutzt werden müssen, um Bestimmungs-Bildelemente des Bestimmungs-Farbbildes (26) zu erzeugen,
eine Steuerlogik zum Zugreifen auf die Werte in der ersten Tabelle (28) unter Benutzung der Verhältnisse jedes Quellen-Bildelementes, die in der zweiten Tabelle (30,32) angegeben sind, und der Größe jeder Farbkompenente der Quellen-Bildelemente, und zum Kombinieren der Werte, auf die von der ersten Tabelle zugegriffen wurde, um Werte der Farbkomponenten für die Bestimmungs-Bildelemente zu schaffen.

2. Bildverarbeitungssystem nach Anspruch 1, enthaltend eine Bediener-Eingabeeinrichtung (12) zum Empfangen von Bediener-Eingaben, die die Größe des Quellen- und /oder Bestimmungsbildes durch einen Bediener angeben, und in dem die Steuerlogik auf die Bediener-Eingabeeinrichtung anspricht, um die zweite Tabelle (30,32) gemäß den Größen der Quellen- und Bestimmungsbilder festzulegen.

3. Bildverarbeitungssystem nach irgendeinem vorhergehenden Anspruch, bei dem die zweite Tabelle (30,32) gemäß der Größe des Bestimmungsbildes dynamisch geschaffen wird.

4. Bildverarbeitungssystem nach irgendeinem vorhergehenden Anspruch, bei dem die zweite Tabelle (31,32) aus einer Anzahl gespeicherter Tabellen ausgewählt wird, die der Größe des Bestimmungsbildes entsprechen.

5. Bildverarbeitungssystem nach irgendeinem vorhergehenden Anspruch, bei dem in der zweiten Tabelle (31,32) nur sich nicht wiederholende Daten enthalten sind, und die zweite Tabelle rekursiv benutzt wird.

6. Bildverarbeitungssystem nach irgendeinem vorhergehenden Anspruch, bei dem jedes Bildelement aus einer roten Farbkomponente, einer grünen Farbkomponente und einer blauen Farbkomponente besteht.

7. Bildverarbeitungssystem nach irgendeinem vorhergehenden Anspruch, bei dem die erste Tabelle Werte enthält, die ausgewählten Prozentsätzen jeder zugelassenen Größe jeder Farbkomponente entsprechen.

8. Bildverarbeitungssystem nach Anspruch 7, bei dem jede Farbkomponente eine gleiche Anzahl zulässiger Größen einschließt.

9. Bildverarbeitungssystem nach irgendeinem vorhergehenden Anspruch, enthaltend eine Farb-Anzeigeeinrichtung (20) zum Anzeigen der Zeilen und Spalten der Bestimmungs-Bildelemente.

10. Verfahren zum Betrieb eines Bildverarbeitungssystem nach irgendeinem vorhergehenden Anspruch zum Umformen eines Farbbildes (24), das aus Zeilen und Spalten von Bildelementen besteht, wobei jedes Bildelement mehrfache Farbkomponenten enthält, und das Verfahren aus den Schritten besteht des:
Erstellens in der Speichereinrichtung einer ersten Tabelle (28) von Werten, die Verhältnisse und Größen jeder Farbkomponente entsprechen,
Zugreifens auf die Werte der ersten Tabelle (28) unter Benutzung der Verhältnisse jedes Bildelementes, die in der zweiten Tabelle (30, 32) enthalten sind, und der Größe jeder Farbkomponenten innerhalb des Bildelementes,
und des Kombinierens der Werte, auf die von der ersten Tabelle (28) zugegriffen wurde, um Zeilen und Spalten der neuen Bildelemente zu schaffen.

## Revendications

1. Système de traitement d'images pour recalibrer une image couleur d'origine (24) d'une première dimension composée de lignes et de colonnes d'éléments d'image d'origine pour former une image couleur de destination (26) d'une deuxième dimension composée de lignes et de colonnes d'éléments d'image de destination, chaque élément d'image comprenant de multiples composantes couleur, caractérisé en ce qu'il comprend :
un dispositif de mémorisation pour mémoriser une première table (28) contenant des valeurs correspondant aux proportions et aux grandeurs de chaque composante couleur, et une deuxième table (30, 32) contenant une indication des proportions des composantes couleur de chaque élément d'image d'origine qui doivent être utilisées pour générer les éléments d'image de destination de l'image couleur de destination (26);
une logique de commande pour accéder aux valeurs dans la première table (28) en utilisant les dites proportions de chaque élément d'image d'origine spécifiées dans ladite deuxième table (30, 32) et la grandeur de chaque composante couleur des dits éléments d'image d'origine, et pour combiner les dites valeurs auxquelles on a accédé dans ladite première table pour créer des valeurs de composante couleur pour les éléments d'image de destination.

2. Système de traitement d'images selon la revendication 1, comprenant un dispositif d'entrée opérateur (12) pour recevoir des entrées opérateur indiquant la dimension de l'image d'origine et/ou de destination en provenance d'un opérateur, et dans lequel le logique de commande est sensible au dispositif d'entrée opérateur pour déterminer la deuxième table (30, 32) en fonction des dimensions des images d'origine et de destination.

3. Système de traitement d'images selon l'une quelconque des revendications précédentes, dans lequel la deuxième table (30, 32) est créée dynamiquement selon la dimension de l'image de destination.

4. Système de traitement d'images selon l'une quelconque des revendications précédentes, dans lequel la deuxième table (30, 32) est sélectionné parmi une pluralité de tables mémorisées correspondant à la dimension de l'image de destination.

5. Système de traitement d'images selon l'une quelconque des revendications précédentes, dans lequel des données non-répétitives sont contenues dans la deuxième table (30, 32) et ladite deuxième table est utilisée de manière récursive.

6. Système de traitement d'images selon l'une quelconque des revendications précédentes, dans lequel chaque élément d'image comprend une composante couleur rouge, une composante couleur vert et une composante couleur bleu.

7. Système de traitement d'images selon l'une quelconque des revendications précédentes, dans lequel les valeurs de ladite première table correspondent à des pourcentages sélectionnés de chaque grandeur permise de chaque composante couleur.

8. Système de traitement d'images selon la revendication 7, dans lequel chaque composante couleur comprend un nombre égal de grandeurs permises.

9. Système de traitement d'images selon l'une quelconque des revendications précédentes comprenant un visuel couleur (20) pour afficher les dites lignes et colonnes d'éléments d'image de destination.

10. Procédé pour exploiter un système de traitement d'images selon l'une quelconque des revendications précédentes pour recalibrer une image couleur (24) composée de lignes et de colonnes d'éléments d'image, chaque élément d'image comprenant de multiples composantes couleur, caractérisé en ce qu'il comprend les étapes consistant à:
établir dans le dispositif de mémorisation une première table (28) de valeurs correspondant aux proportions et aux grandeurs de chaque composante couleur;
accéder aux dites valeurs dans la première table (28) en utilisant les dites proportions de chaque élément spécifiées dans ladite deuxième table (30, 32) et la grandeur de chaque composante couleur des dits éléments d'image; et
combiner les dites valeurs auxquelles on a accédé dans ladite première table (28) pour créer des lignes et des colonnes de nouveaux éléments d'image.
